# EUROPEAN PATENT SPECIFICATION

(11) **EP 0 292 966 B1**
(45) Date of publication and mention of the grant of the patent: **20.03.1996**
(21) Application number: 88108422.2
(22) Date of filing: 26.05.1988
(51) Int. Cl.: H04L 7/04, H04B 7/185

(54) **Digital communication apparatus**
Digitale Datenübertragungsvorrichtung
Appareil de communication numérique

(30) Priority: 28.05.1987 JP 132342/87
(43) Date of publication of application: 30.11.1988
(73) Proprietor: NEC CORPORATION, Tokyo (JP)
(72) Inventor: Sonetaka, Noriyoshi c/o NEC Corporation, Minato-ku Tokyo (JP)
(74) Representative: VOSSIUS & PARTNER

(56) References cited:
- EP-A- 0 195 421
- EP-A- 0 196 647
- J.Das: "Review of Digital Communication" John Wiley and Sons, New York, 1988, pages 435-438 and 464

## Description

The present invention relates to a digital communication apparatus and, more particularly, to a digital communication apparatus having a reception function for detecting, validating, and monitoring reception information.

In a digital communication system wherein a large number of stations use an identical carrier wave to interchange information, each station receives a unique word transmitted from a predetermined station at a predetermined period to set its own transmission/reception timing, and transmits information signals with the unique word at the set transmission timing, or receives information signals with a unique word at the set reception timing. In this case, in order to improve reliability of information transfer, the information signals except for the unique word are encoded into data having optimal redundancy with respect to the unique word.

Such a digital communication apparatus is disclosed in JP-A-260-227542 MIYAUCHI and NOSAKA, "Digital Satellite Communication", pp. 76 77 published in Japan, and Dr. Kamilo, et al., "Digital Communication", pp. 375 - 377 published in the U.S.A.

However, various troubles may occur in this system because of degradation in quality of communication channels or the influence of thermal noise in the system. For example, even if a received unique word is correct, it cannot be detected (to be referred to as mis-detection hereinafter). A bit pattern generated from a bit error included in a reception signal is erroneously detected as a bit pattern of a correct unique word (to be referred to as false detection). Although a unique word is correctly detected, an error caused in a reception signal other than the unique word exceeds an error correction performance (i.e., degradation in error correction performance). In such cases, various problems are posed in the above-described digital communication apparatus as follows.

In the conventional apparatus, if miss-detection of a unique word is caused, a reception signal is not fetched or not regarded as valid even if it is fetched because a transmission/reception timing cannot be set. In this apparatus, a synchronization operation is repeated. For this reason, this mis-detection of a unique word tends to continuously occur, and hence necessary information cannot be obtained. Since a unique word detection timing is often normal even in the mis-detection period, a demand has arisen for an improvement in this respect.

In such a digital communication apparatus, an identification code of the own station included in a reception signal is detected, thereby fetching necessary information of the station such as device control information or state monitoring information. However, in false detection, since a unique word is detected at a timing different from a correct timing, a detection timing of a station identification code differs from the correct timing, so that a bit pattern located at the wrong timing position may be recognized as the station identification code.

In the case of degradation in error correction performance, the precision of a reception information signal is low. However, since a unique word is correctly detected, the reception information signal can be fetched as long as a station identification code is confirmed. That is, in the conventional digital communication apparatus, when a false detection or degradation in error correction performance is caused, an erroneous reception information signal is fetched.

EP-A-195 421 discloses a synchronization circuit for digital communication in which the synchronization judgement is based on synchronization words and on the correctability of the data words. EP-A-196 647 establishes frame synchronization at the receiving end without inserting a frame synchronization word into the transmitted data.

It is an object of the present invention to provide a digital communication apparatus, which can process a reception information signal as valid when its content is correct even if a mis-detection of a unique word is caused, and does not process a reception information signal as valid if a false detection or degradation in error correction performance is caused. This object is solved with the features of the claims.

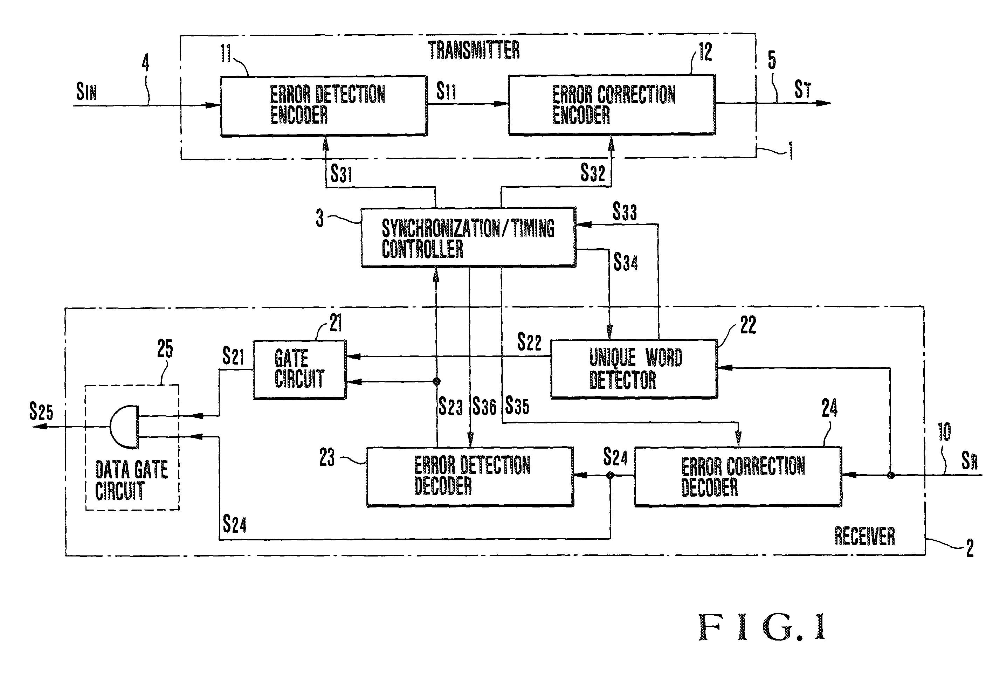

An embodiment of the present invention will be described with reference to the accompanying drawings, in which Fig. 1 is a block diagram showing an arrangement according to an embodiment of the present invention.

Referring to Fig. 1, the digital communication apparatus comprises a transmitter 1, a receiver 2, and a synchronization/timing controller 3 for controlling the operations of the transmitter 1 and the receiver 2.

The transmitter 1 includes an error detection encoder 11 and an error correction encoder 12. The error detection encoder 11 adds an error detection check bit for detecting a code error to an information signal S_{IN} to be transmitted, which is input through a line 4, in accordance with a control signal S₃₁ from the controller 3 so as to generate an information signal S₁₁ constituted by, e.g., a cyclic code.

An error detector using a cyclic code is described in detail in YAMAMOTO, "Data Communication", pp. 82 - 107.

The error correction encoder 12 receives the information signal S₁₁ to which the error detection check bit is added by the error detection encoder 11. The error correction encoder 12 performs an error correction encoding process in accordance with a control signal S₃₂ from the controller 3 so as to add redundancy based on a predetermined rule to the information signal S₁₁, and transmits the resultant signal to a channel 5 as a transmission signal S_{T}.

The receiver 2 includes a gate circuit 21, a unique word detector 22, an error detection decoder 23, and an error correction decoder 24. A reception signal S_{R} input from another station through a transmission path 10 is input to the error correction decoder 24 and the unique word detector 22. The error correction decoder 24 performs an error correction decoding process of the reception signal S_{R} in accordance with a control signal S₃₅ from the controller 3 to restore a reception information signal S₂₄ corresponding to the information signal S₁₁ from the source station. Then, the error correction decoder 24 transmits the reception information signal S₂₄ to one input of a data gate circuit 25 and also outputs it to the error detection decoder 23.

The error detection decoder 23 compares a check bit obtained upon checking of an error in the reception information signal S₂₄ with the error detection check bit added in the transmitter side to determine coincidence/non-coincidence therebetween, and outputs a code error detection information signal S₂₃ to the controller 3, one input terminal of the gate circuit 21, and to the other input of the data gate circuit 25 only when an error is not present. With this processing, an error is detected in units of bits.

An output S₂₁ of the gate circuit 21 allows to gate the reception data, i.e., the output S₂₄ from the error correction decoder 24 if synchronization is obtained and an error is not detected.

The unique word detector 22 detects a unique word in the reception signal S_{R} in the following manner. A unique word is constituted by a given bit pattern. However, the bit pattern of a unique word may be changed into various forms because of degradation in quality of channels or thermal noise in the system. As a result, a unique word constituted by a correct bit pattern may not be obtained. For this reason, an allowable range is set with respect to the number of bit errors caused in a bit pattern in a unique word. Each bit of a reception signal is compared with a corresponding bit of a correct unique word. When the number of non-coincident bits of a bit pattern falls within the allowable range, it is determined that a unique word is received. When the unique word detector 22 detects a unique word, it transmits a signal S₃₃ representing the timing of the unique word detection and a signal S₂₂ representing the detected unique word to the controller 3 and the other input terminal of the gate circuit 21, respectively.

The gate circuit 21 transmits a reception signal detection validation information signal S₂₁ informing that a correct unique word is detected and a code error is not present to the device of the next stage when conditions of the both inputs are satisfied.

The controller 3 receives the unique word detection timing signal S₃₃ from the unique word detector 22, and generates timing signals S₃₁ and S₃₂ to be respectively supplied to the error detection encoder 11 and the error correction encoder 12 of the transmitter 1.

The controller 3 is designed to continuously transmit unique word detection timing information signals S₃₄ to the unique word detector 22 in response to the code error detection information signal S₂₃ from the error detection decoder 23 even if the unique word detection timing signal S₃₃ from the unique word detector 22 is not input to the controller 3.

Even if a mis-detection of a unique word is caused and the unique word detection timing signal S₃₃ cannot be transmitted, the unique word detector 22 keeps the apparatus in a synchronized state as long as the unique word detection timing information signals S₃₄ are continuously supplied.

In addition, the controller 3 supplies a timing signal S₃₆ for performing error detection decoding to the error detection decoder 23.

Additionally, the conventional apparatus does not include the error detection encoder 11, the error detection decoder 23, and the gate circuit 21.

An operation of the circuit shown in Fig. 1 will be described below.

In the transmitter 1, the error detection encoder 11 adds a check bit to the information signal S_{IN} to be transmitted. Then, the resultant signal is subjected to error correction encoding in the error correction encoder 12 and is transmitted to the channel 5 as the transmission signal S_{T}.

In the receiver 2 for receiving signals transmitted from another station, the unique word detector 22 detects a unique word in the reception signal S_{R}. In addition, the error correction decoder 24 performs error correction decoding of the encoded signal in the reception signal S_{R}. Upon reception of a demodulated signal from the error correction decoder 24, the error detection decoder 23 determines the presence/absence of an error in the demodulated signal on the basis of a check bit included in the demodulated signal. According to this error detection scheme, most errors except for certain conditions can be detected in units of bits by utilizing, e.g., a cyclic code.

The gate circuit, i.e., informing signal generator 21 generates the signal S₂₁ for informing that detection of a reception signal is confirmed when the unique word detector 22 detects a unique word and the error detection decoder 23 determines the absence of an error. With this operation, the problems of false detection of a unique word and of degradation in error correction performance are simultaneously solved.

Furthermore, the synchronization/timing controller 3 basically controls the transmission/reception timing of the apparatus of the present invention in response to the unique word detection, and also controls the unique word detector to allow continuous detection of unique words. That is, the transmission/reception timing cannot be controlled during the mis-detection period of a unique word. In this case, however, the detection timing position of a unique word tends to coincide with that in the detection period. For this reason, according to the present invention, in addition to the basic functions, the synchronization/timing controller 3 is provided with means for controlling the unique word detector 22 so as to be kept in the synchronized state when the error detection decoder 23 determines the absence of an error even if a unique word is not detected at the unique word detection timing described above. As a result, even if a mis-detection of a unique word is caused, the synchronized state is held as long as the reception information signal is correct, and hence the reception information signal can be processed as valid. Therefore, necessary information can be reliably obtained.

As has been described, according to the digital communication apparatus of the present invention, since the scheme using both the error correction and error detection functions is employed, a false detection of a unique word or degradation in error correction performance can be detected, thereby preventing a reception information signal having an error from being processed as valid. In addition, in the mis-detection period of a unique word, since the synchronized state can be held as long as an error is not present in a reception information signal, necessary information can be reliably obtained.

## Claims

1. A digital communication apparatus comprising:
a transmitter means (1) comprising an error coding circuit comprising an error correction encoder (12) for performing error correction encoding of the information signal to generate an encoded signal as a transmission signal ; and
a receiver means (2) comprising;
an error decoding circuit comprising an error correction decoder (24) for performing error correction decoding of an encoded signal in a reception signal and outputting a resultant signal as an output from said receiver means,
a unique word detector (22) for detecting a unique word in the reception signal in accordance with a unique word detection timing signal,
a gate circuit (21) for receiving a signal representing a detected unique word from said unique word detector and a signal representing absence of an error from said error decoding circuit and generating a signal externally informing that detection of a reception signal is confirmed ; and
a controller means (3) for controlling a transmission/reception timing of said transmitter (1) and receiver means (2) in response to the signal representing detection of a unique word from said unique word detector (22), and for outputting said unique word detection timing signal when either said unique word detector (22) continuously detects unique words or when a unique word is not detected at the unique word detection timing but a signal representing absence of an error is supplied from said error decoding circuit,
characterised in that:
the error coding circuit comprises additionally error detection encoder means (11) for adding an error detection check bit to the information signal to be transmitted, the output signal of said error detection encoder means being inputted to said error correction means, and
the receiver comprises additionally an error detection decoder (23) for receiving the decoded signal from said error correction decoder and determining a presence/absence of an error in the decoded signal on the basis of the error detection check bit included therein.

## Patentansprüche

1. Digitale Kommunikationsvorrichtung mit:
einer Sendereinrichtung (1) mit einer Fehlercodierschaltung mit einem Fehlerkorrekturcodierer (12) zum Durchführen einer Fehlerkorrekturcodierung des Informationssignals, um ein codiertes Signal als Sendesignal zu erzeugen; und
einer Empfängereinrichtung (2) mit:
einer Fehlerdecodierschaltung mit einem Fehlerkorrekturdecodierer (24) zum Durchführen einer Fehlerkorrekturdecodierung eines codierten Signals in einem Empfangssignal und Ausgeben eines resultierenden Signals als Ausgabe von der Empfängereinrichtung,
einem Detektor (22) für eindeutige Wörter zum Detektieren eines eindeutigen Worts in dem Empfangssignal entsprechend einem Detektionstaktungssignal für eindeutige Wörter,
einer Gatterschaltung (21) zum Empfangen eines Signals als Darstellung eines detektierten eindeutigen Worts von dem Detektor für eindeutige Wörter und eines Signals als Darstellung des Nichtvorhandenseins eines Fehlers von der Fehlerdecodierschaltung und Erzeugen eines Signals als externe Information darüber, daß die Detektion eines Empfangssignals bestätigt ist; und
einer Steuereinrichtung (3) zum Steuern einer Sende-/ Empfangstaktung der Sender- (1) und Empfängereinrichtung (2) als Reaktion auf das Signal als Darstellung der Detektion eines eindeutigen Worts von dem Detektor (22) für eindeutige Wörter und zum Ausgeben des Detektionstaktungssignals für eindeutige Wörter, wenn der Detektor (22) für eindeutige Wörter kontinuierlich eindeutige Wörter detektiert oder wenn ein eindeutiges Wort nicht bei der Detektionstaktung für eindeutige Wörter detektiert, sondern ein Signal als Darstellung des Nichtvorhandenseins eines Fehlers von der Fehlerdecodierschaltung geliefert wird;
dadurch gekennzeichnet, daß
die Fehlercodierschaltung zusätzlich aufweist: eine Fehlerdetektions-Codiereinrichtung (11) zum Zufügen eines Fehlerdetektions-Prüfbits zu dem zu sendenden Informationssignal, wobei das Ausgabesignal der Fehlerdetektions-Codiereinrichtung in die Fehlerkorrektureinrichtung eingegeben wird, und
der Empfänger zusätzlich aufweist: einen Fehlerdetektionsdecodierer (23) zum Empfangen des decodierten Signals von dem Fehlerkorrekturdecodierer und Bestimmen eines Vorhandenseins/Nichtvorhandenseins eines Fehlers in dem decodierten Signal auf der Grundlage des darin enthaltenen Fehlerdetektions-Prüfbits.

## Revendications

1. Appareil de communication numérique comprenant :
des moyens d'émetteur (1) comprenant un circuit de codage d'erreur comprenant un codeur de correction d'erreur (12) pour réaliser un codage de correction d'erreur du signal d'information afin de générer un signal codé en tant que signal d'émission ; et
des moyens de récepteur (2) comprenant :
un circuit de décodage d'erreur comprenant un décodeur de correction d'erreur (24) pour réaliser un décodage de correction d'erreur d'un signal codé dans un signal de réception et pour émettre en sortie un signal résultant en tant que sortie depuis lesdits moyens de récepteur ;
un détecteur de mot unique (22) pour détecter un mot unique dans le signal de réception conformément à un signal de cadencement de détection de mot unique ;
un circuit de porte (21) pour recevoir un signal représentant un mot unique détecté provenant dudit détecteur de mot unique et un signal représentant l'absence d'une erreur provenant dudit circuit de décodage d'erreur et pour générer un signal informant de façon externe du fait qu'une détection d'un signal de réception est confirmée ; et
des moyens de contrôleur (3) pour contrôler un cadencement d'émission/réception desdits moyens d'émetteur (1) et de récepteur (2) en réponse au signal représentant la détection d'un mot unique provenant dudit détecteur de mot unique (22) et pour émettre en sortie ledit signal de cadencement de détection de mot unique soit lorsque ledit détecteur de mot unique (22) détecte en continu des mots uniques soit lorsqu'un unique mot n'est pas détecté lors du cadencement de détection de mot unique mais qu'un signal représentant l'absence d'une erreur est appliqué depuis ledit circuit de décodage d'erreur,
caractérisé en ce que :
le circuit de codage d'erreur comprend en outre des moyens de codeur de détection d'erreur (11) pour additionner un bit de vérification de détection d'erreur au signal d'information à émettre, le signal de sortie desdits moyens de codeur de détection d'erreur étant entré sur lesdits moyens de correction d'erreur ; et
le récepteur comprend en outre un décodeur de détection d'erreur (23) pour recevoir le signal décodé provenant dudit décodeur de correction d'erreur et pour déterminer une présence/absence d'une erreur dans le signal décodé sur la base du bit de vérification de détection d'erreur inclus dedans.
